(19) Europäisches Patentamt
European Patent Office
Office européen des brevets

(11) **EP 2 055 633 B1**

(12) **FASCICULE DE BREVET EUROPEEN**

(45) Date de publication et mention
de la délivrance du brevet:
**21.07.2010 Bulletin 2010/29**

(51) Int Cl.:
***B64G 1/10*** *(2006.01)* ***H04B 7/185*** *(2006.01)*

(21) Numéro de dépôt: **08165969.0**

(22) Date de dépôt: **07.10.2008**

(54) **Procédé d'optimisation de la charge utile d'un satellite de télécommunication multifaisceaux**

Optimierungsverfahren der Nutzlast eines Mehrfachstrahl-Funksatelliten

Method of optimising the payload of a multi-beam telecommunications satellite

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.10.2007 FR 0758690**

(43) Date de publication de la demande:
**06.05.2009 Bulletin 2009/19**

(73) Titulaire: **Eutelsat**
**75015 Paris (FR)**

(72) Inventeurs:
• **Fenech, Hector**
**92130 Issy les Moulineaux (FR)**
• **Lance, Emmanuel**
**92110 Clichy (FR)**

(74) Mandataire: **Lebkiri, Alexandre**
**Cabinet Camus Lebkiri**
**10 rue de la Pépinière**
**75008 Paris (FR)**

(56) Documents cités:
**WO-A-2006/043115 FR-A- 2 783 377**

EP 2 055 633 B1

**Description**

La présente invention concerne un procédé d'optimisation de la charge utile d'un satellite de télécommunication à plusieurs faisceaux, dit satellite multifaisceaux ou multispots. Ce type de satellite permet l'utilisation de plusieurs faisceaux d'antennes à bord du satellite pour couvrir des zones géographiques contiguës, au lieu d'un seul faisceau large.

De tels satellites multifaisceaux permettent d'établir plusieurs liaisons radiofréquences occupant une même bande de fréquence sur des faisceaux différents.

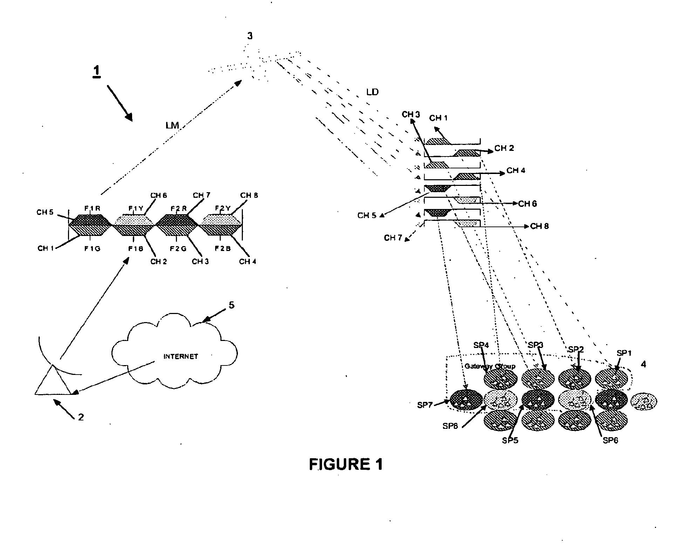

Un exemple de configuration multifaisceaux est illustré en figure 1.

Des signaux sont envoyés vers un satellite 3 sur une liaison montante LM par une station terrestre 2 telle qu'une passerelle de communication (« gateway » en anglais) reliée à une dorsale Internet 5. Ces signaux sont ensuite traités au niveau du satellite 3 puis retransmis sur une liaison descendante LD sous la forme d'une pluralité de faisceaux ou spots SP1 à SP8.

Certains satellites multifaisceaux permettent par ailleurs d'émettre (et de recevoir) des transmissions polarisées : la polarisation peut être linéaire (dans ce cas les deux sens de polarisation sont respectivement horizontal et vertical) ou circulaire (dans ce cas les deux sens de polarisation sont respectivement circulaire gauche ou circulaire droit).

On notera que dans l'exemple de la figure 1, la liaison montante partant de la station 2 utilise deux polarisations avec quatre canaux pour chaque polarisation, respectivement Ch1 à Ch4 pour la première polarisation et Ch5 à Ch8 pour la deuxième polarisation.

Les huit canaux Ch1 à Ch8, après traitement par la charge utile du satellite 3 formeront les huit faisceaux SP1 à SP8 (un canal étant associé à un faisceau dans cet exemple).

La charge utile du satellite désigne la partie qui lui permet de remplir la mission pour laquelle il a été conçu c'est-à-dire pour un satellite de télécommunication 3 tel que celui représenté en figure 1, d'assurer la réception, le traitement (conversion de fréquence, filtrage, amplification) et la réémission des signaux de télécommunication issus de la station terrestre 2. La charge utile comprend essentiellement les antennes du satellite et les répéteurs (et pas les équipements de contrôle, de propulsion ou d'alimentation électrique qui appartiennent à la plate-forme du satellite).

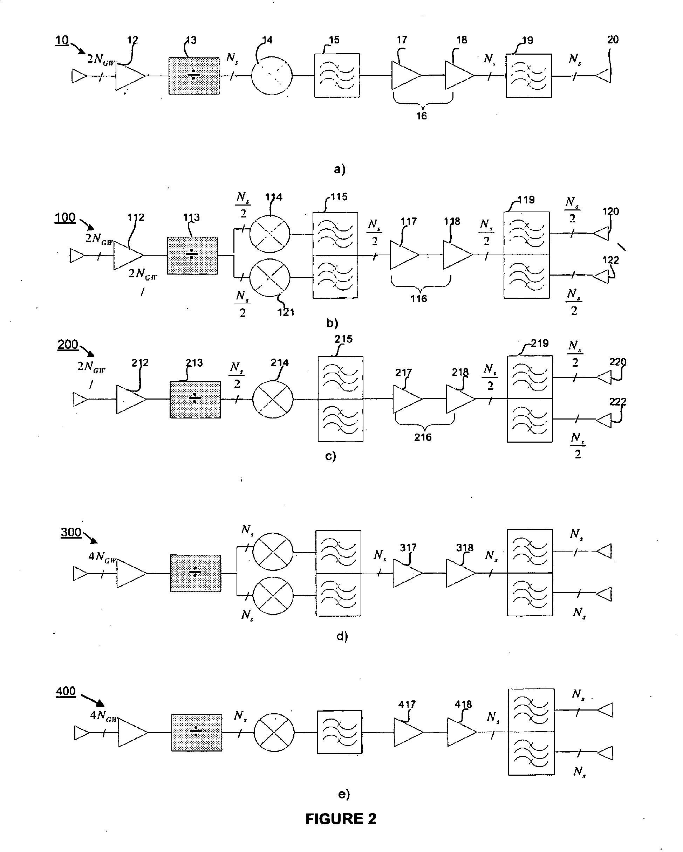

La figure 2a représente de façon connue un bloc diagramme fonctionnel d'une architecture de charge utile 10 avec émission multifaisceaux sur la liaison descendante.

Après réception et sélection de la polarisation, le signal reçu d'une passerelle de communication est amplifié par un amplificateur faible bruit 12 LNA (« Low Noise Amplifier »). Le signal est ensuite séparé en Ns canaux de liaison montante par un dispositif diviseur de signal 13. Les Ns canaux de liaison montante sont ensuite translatés en fréquence par un circuit convertisseur de fréquence 14 généralement formé par un oscillateur local et filtrés par un filtre d'entrée 15 (du type filtre passe bande) de façon à former Ns canaux en accord avec le plan de fréquence de la liaison descendante. L'oscillateur local est le plus souvent constitué d'un quartz commandé en tension VCO (« Voltage Controlled Oscillator » en anglais) avec boucle à verrouillage de phase. Les Ns canaux à fréquence translatée sont amplifiés au travers d'un amplificateur de puissance 16 HPA (« High Power Amplifier » en anglais) généralement formé par un amplificateur de canal 17 CAMP (« Chanel AMPlifier » en anglais) et un amplificateur à tube à ondes progressives 18 TWTA (« Traveling Wave Tube Amplifier » en anglais) formant Ns signaux de faisceau de liaison descendante. Les amplificateurs de canal 17 sont généralement des amplificateurs à commande de gain qui permettent de régler le niveau de puissance des signaux en entrée des tubes à ondes progressives 18. Les tubes 18 peuvent être remplacés par des amplificateurs de puissance à état solide SSPA (« Solid State Power Amplifier » en anglais). Il est également possible d'utiliser des architectures plus sophistiquées comprenant des dispositifs du type MPA (« Multiport Amplifier » en anglais) offrant davantage de flexibilité. Chacun des Ns signaux de faisceau est ensuite filtré au travers d'un filtre passe bande de sortie 19 puis envoyé sur une source 20 telle qu'un cornet rayonnant vers un réflecteur pour la formation d'un faisceau. Selon cette configuration, si l'on désigne par $N_{GW}$ le nombre de passerelles de communication, la charge utile 10 comporte :

-    $2N_{GW}$ amplificateurs faible bruit 12 LNA ;
-    $2N_{GW}$ dispositifs diviseurs de signal 13 ;
-    $N_s$ circuits convertisseur de fréquence 14 ;
-    $N_s$ filtres d'entrée 15 ;
-    $N_s$ amplificateurs de puissance 16 HPA ;
-    $N_s$ filtres passe bande de sortie 19 ;
-    $N_s$ cornets 20.

Le document FR2783377 décrit ainsi un exemple de charge utile de satellite de télécommunication multifaisceaux pour la formation d'une pluralité de faisceaux sur une liaison descendante.

Une telle configuration est cependant susceptible de poser quelques difficultés.

En effet, selon l'architecture de la figure 2a), le nombre de convertisseurs de fréquence, de filtres d'entrée, d'amplificateurs de canaux et de tubes à ondes progressives est égal aux nombres de faisceaux Ns de liaison descendante.

Dès lors, pour des systèmes de taille importante, le nombre élevé de composants formant la charge utile devient pénalisant en termes de masse et de lancement du véhicule spatial. Ces inconvénients ont bien entendu également un impact sur les coûts associés.

Dans ce contexte, la présente invention vise à fournir un procédé d'optimisation de la charge utile d'un satellite de télécommunication multifaisceaux permettant de réduire la masse de la charge utile tout en maintenant les exigences en matière de puissance isotrope rayonnée effective (PIRE ou « EIRP - Effective Isotropic Radiated Power » en anglais).

A cette fin, l'invention propose un procédé d'optimisation de la charge utile d'un satellite de télécommunication multifaisceaux, dite charge utile optimisée, à partir d'une charge utile de référence pour la formation de $N_s$ faisceaux sur une liaison descendante, $N_s$ étant un nombre entier naturel strictement supérieur à 1, ladite charge utile de référence comportant des moyens d'amplification formés :

- soit par $N_s$ premières unités d'amplification comportant une entrée et une sortie, chacune des $N_s$ premières unités d'amplification étant destinée à amplifier un faisceau,
- soit par un premier équipement d'amplification comportant $N_s$ entrées et $N_s$ sorties et destiné à amplifier les $N_s$ faisceaux,

ledit procédé étant caractérisé en ce que ladite optimisation est réalisée en répondant à l'un des deux critères suivants :

- premier critère : la capacité de ladite charge utile de référence est conservée et l'aire de la zone de couverture de ladite charge utile est divisée par N, N étant un nombre entier naturel strictement supérieur à 1 de sorte que $N_s$ est un multiple de N;
- second critère : l'aire de la zone de couverture de ladite charge utile est conservée et ladite capacité est multipliée par N;

selon ledit premier critère, ledit procédé comporte les étapes suivantes :

- comparaison dudit nombre $N_s$ de faisceaux avec un nombre seuil de faisceaux $N_{seuil}$ ou comparaison de ladite capacité avec une capacité seul $C_{seuil}$;
- si Ns est supérieur à $N_{seuil}$ ou si ladite capacité est supérieure à $C_{seuil}$:

    o lorsque lesdits moyens d'amplification sont formés par lesdites $N_s$ premières unités d'amplification :substitution dans ladite charge utile optimisée desdites $N_s$ premières unités par $N_s/N$ secondes unités d'amplification, chacune des $N_s/N$ secondes unités d'amplification étant destinée à amplifier N faisceaux ;
    o lorsque lesdits moyens d'amplification sont formés par ledit premier équipement d'amplification : substitution dans ladite charge utile optimisée dudit premier équipement par un second équipement d'amplification comportant $N_s/N$ entrées et $N_s/N$ sorties et destiné à amplifier les $N_s$ faisceaux répartis sur lesdites $N_s/N$ entrées ;

selon ledit second critère, ledit procédé comporte les étapes suivantes :

- lorsque lesdits moyens d'amplification sont formés par lesdites $N_s$ premières unités d'amplification : substitution dans ladite charge utile optimisée desdites $N_s$ premières unités par $N_s$ troisièmes unités d'amplification, chacune desdites $N_s$ troisièmes unités d'amplification étant destinée à amplifier N faisceaux ;
- lorsque lesdits moyens d'amplification sont formés par ledit premier équipement d'amplification : substitution dans ladite charge utile optimisée dudit premier équipement par un troisième équipement d'amplification comportant $N_s$ entrées et $N_s$ sorties et destiné à amplifier $NxN_s$ faisceaux répartis sur lesdites $N_s$ entrées.

Comme déjà dit plus haut, on entend par charge utile du satellite la partie qui lui permet d'assurer la réception, le traitement et la réémission des signaux de télécommunication issus de la station terrestre. La charge utile comprend essentiellement les antennes du satellite et les répéteurs.

On entend par capacité la capacité en bande passante $C_{FWD}$ du satellite exprimée en Hz et définie par la formule suivante :

$$C_{FWD} = Min\left(\frac{P_{FWD}N_s G}{eirp}, N_s B_{spot}\right)$$

dans laquelle:

- *Min(x,y)* est une fonction fournissant la plus petite valeur de x ou de y,
- $P_{FWD}$ est la puissance RF du répéteur sur le cornet de l'antenne exprimée en W,
- $N_s$ est le nombre de faisceaux,
- G désigne le gain de l'antenne en dB,
- *eirp* est la puissance isotrope rayonnée effective (dite aussi PIRE) en dBW/Hz,
- $B_{spot}$ est la bande passante disponible par faisceau sur la base d'une polarisation unique exprimé en Hz.

Grâce à l'invention, on utilise avantageusement le partage d'une unité d'amplification tel qu'un tube à ondes progressives TWTA ou un amplificateur SSPA entre plusieurs faisceaux (ou le partage d'un équipement du type MPA). On peut également utiliser le partage d'un équipement du type MPA en réduisant le nombre d'entrées/sorties du MPA en restant à capacité constante.

Deux critères peuvent être retenus pour déterminer la charge utile optimisée :

- soit on conserve la même capacité que dans une charge utile standard telle celle décrite en référence à la figure 2a) et on réduit le nombre de tubes TWTA d'un facteur N, entraînant de ce fait une réduction de la masse totale de la charge utile, de la puissance continue DC requise et de la dissipation thermique ; dans ce cas, le partage de chaque tube par plusieurs faisceaux devient intéressant lorsque le nombre de faisceaux dépasse une valeur seuil ;
- soit on conserve la même surface de zone de couverture que pour la charge utile de la figure 2a) et on garde le même nombre de tubes TWTA ; dans ce cas, on augmente d'un facteur N la capacité alors que la masse de la charge utile est augmentée d'un facteur inférieure à N ; dans cette configuration, le partage d'un tube pour plusieurs faisceaux est toujours plus avantageux en termes de masse que l'association d'un faisceau par tube.

Le dispositif selon l'invention peut également présenter une ou plusieurs des caractéristiques ci-dessous, considérées individuellement ou selon toutes les combinaisons techniquement possibles.

Avantageusement, la détermination dudit nombre seuil de faisceaux $N_{seuil}$ comporte les étapes suivantes :

- détermination de la masse de ladite charge utile de référence en fonction du nombre de faisceaux $N_s$;
- détermination de la masse de la charge utile optimisée en fonction du nombre de faisceau $N_s$ ;
- détermination de $N_{seuil}$ lorsque les masses respectives de ladite charge de référence et de ladite charge optimisée sont égales.

Selon un mode de réalisation préférentiel, l'entier naturel N est égal à 2.

Avantageusement, le nombre seuil de faisceaux $N_{seuil}$ est supérieur à 15 et de préférence supérieur à 20, ces nombres étant susceptibles d'évoluer avec les technologies employées.

Selon un premier mode de réalisation préférentiel, lesdites unités d'amplification sont formées par des tubes à ondes progressives TWTA.

Selon un deuxième lesdites unités d'amplification sont formées par des amplificateurs à semiconducteur SSPA.

Selon un troisième mode de réalisation préférentiel, lesdits équipements d'amplification sont formés par des amplificateurs multiports MPA.

Avantageusement, le procédé selon l'invention comporte une étape de réduction d'un facteur N du nombre de convertisseurs de fréquence compris dans ladite charge utile optimisée par regroupement par groupe de N canaux dans le plan de fréquences de la liaison descendante.

Avantageusement, ladite capacité $C_{seuil}$ est supérieure ou égale à 5 Ghz, ce nombre pouvant évoluer en fonction de la technologie employée.

D'autres caractéristiques et avantages de l'invention ressortiront clairement de la description qui en est donnée ci-dessous, à titre indicatif et nullement limitatif, en référence aux figures annexées, parmi lesquelles :

- la figure 1 est une représentation schématique simplifiée d'une configuration multifaisceaux;
- la figure 2 a) est un bloc diagramme fonctionnel d'une architecture de charge utile de référence selon l'état de la technique;
- les figures 2 b) et 2 c) représentent chacune un bloc diagramme fonctionnel d'une architecture de charge utile optimisée par le procédé selon l'invention en fonction du premier critère, respectivement sans et avec contrainte sur le plan de fréquences ;
- les figures 2 d) et 2 e) représentent chacune un bloc diagramme fonctionnel d'une architecture de charge utile optimisée par le procédé selon l'invention en fonction du second critère, respectivement sans et avec contrainte sur le plan de fréquences ;

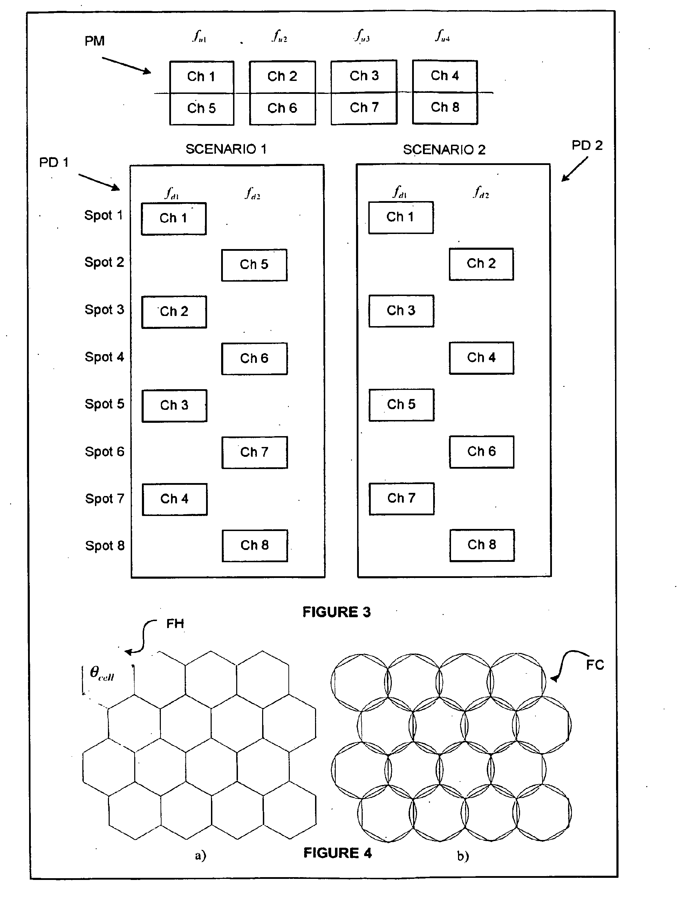

- la figure 3 représente deux configurations de plans de fréquence de liaison montante et de liaison descendante;
- la figure 4 a) représente un exemple de zone de couverture composée d'une pluralité d'hexagones disjoints;
- la figure 4 b) représente une approximation de la zone de couverture de la figure 4 a) composée d'une pluralité de faisceaux circulaires ;

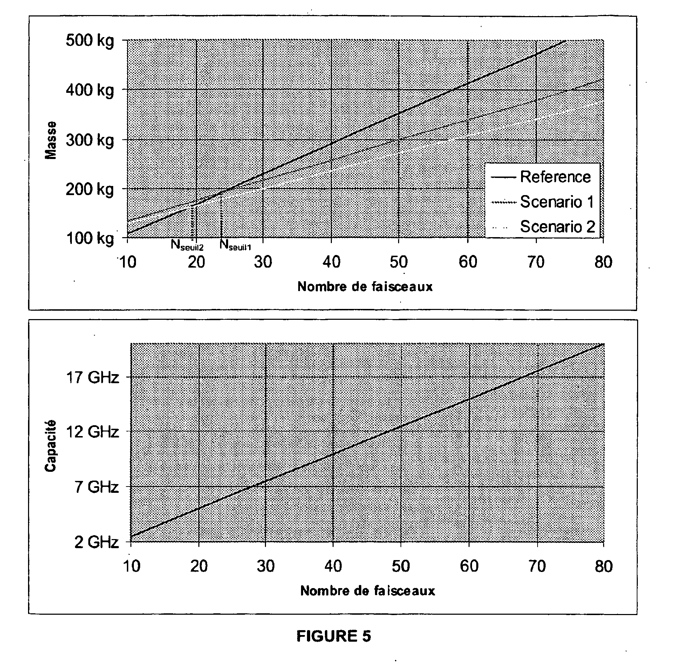

- La figure 5 représente l'évolution linéaire de la masse de la charge utile en fonction du nombre de faisceaux dans trois configurations de charge utile ainsi que l'évolution de la capacité en fonction du nombre de faisceaux.

Dans toutes les figures, les éléments communs portent les mêmes numéros de référence.

Les figures 1 et 2a) ont été décrites précédemment en référence à l'état de la technique.
La figure 2b) représente un bloc diagramme fonctionnel d'une architecture de charge utile 100 avec émission multifaisceaux sur la liaison descendante optimisée par le procédé selon l'invention.

Après réception et sélection de la polarisation, le signal reçu est amplifié par un amplificateur faible bruit 112 LNA. Le signal est ensuite séparé en Ns canaux de liaison montante par un dispositif diviseur de signal 113. Les Ns canaux de liaison montante sont ensuite translatés en fréquence par un circuit convertisseur de fréquence 114 ou 121. Les convertisseurs 114 et 121 forment une paire de convertisseurs montés en parallèle de sorte que chacun fournisse une entrée d'un multiplexeur d'entrée 115 réalisant un filtrage de façon à former un signal filtré regroupant les deux canaux d'entrée.

Les $N_s/2$ signaux à deux canaux à fréquence translatée sont amplifiés au travers d'un amplificateur de puissance 116 HPA généralement formé par un amplificateur de canal 117 CAMP et un amplificateur à tube à ondes progressives 118 TWTA formant $N_s/2$ signaux regroupant deux faisceaux de liaison descendante.

Chacun des $N_s/2$ signaux regroupant deux faisceaux est ensuite séparé et filtré au travers d'un démultiplexeur de sortie 119 de façon à former deux signaux de faisceau de liaison descendante.

Chacun des $N_s$ signaux de faisceau de liaison descendante est ensuite envoyé sur une source 120 telle qu'un cornet qui rayonne vers un réflecteur pour la formation d'un faisceau. Selon cette configuration, si on désigne par $N_{GW}$ le nombre de passerelle de communication, la charge utile 100 comporte :

- $2N_{GW}$ amplificateurs faible bruit 112 LNA ;
- $2N_{GW}$ dispositifs diviseurs de signal 113 ;
- $N_s/2$ circuits convertisseur de fréquence 114 et $N_s/2$ circuits convertisseur de fréquence 121 ;
- $N_s/2$ multiplexeurs d'entrée 115;
- $N_s/2$ amplificateurs de puissance 116 HPA ;
- $N_s/2$ démultiplexeurs de sortie 119 ;
- $N_s$ cornets 20.

On notera que chaque tube à ondes progressives 118 partage ici l'amplification de deux faisceaux ; même si l'invention illustre plus particulièrement le cas d'un partage de deux faisceaux, l'invention s'applique également à un nombre N plus élevé de faisceaux partagés par le même tube à ondes progressives.

On constate que la charge utile 100 permet une réduction d'un facteur N du nombre de TWTA par rapport à la charge utile 10 de la figure 2a).

La figure 3 illustre deux scénarios possibles permettant de rendre compatible un plan de fréquences PM de liaison montante avec un premier plan de fréquence PD1 (scénario 1) de liaison descendante ou un second plan de fréquences PD2 (scénario 2) de liaison descendante.

Comme dans le cas de la figure 1, la liaison montante utilise deux polarisations avec quatre canaux pour chaque polarisation, respectivement Ch1 à Ch4 pour la première polarisation et Ch5 à Ch8 pour la deuxième polarisation.

Selon le plan de fréquences PM, les canaux Ch1, Ch2, Ch3 et Ch4 ont respectivement pour fréquence centrale $f_{u1}, f_{u2}, f_{u3},$ et $f_{u4}$. De même, les canaux Ch5, Ch6, Ch7 et Ch8 ont respectivement pour fréquence centrale $f_{u1}, f_{u2}, f_{u3},$ et $f_{u4}$.

Selon le plan de fréquences PD2, les canaux Ch1, Ch3, Ch5 et Ch7 ont pour fréquence centrale $f_{d1}$ et les canaux Ch2, Ch4, Ch6 et Ch8 ont pour fréquence centrale $f_{d2}$.

En considérant que l'écart de fréquence $\Delta f$ entre canaux est constant, aussi bien sur la liaison montante que sur la liaison descendante, on a la relation suivante :

$$\Delta f = f_{u2} - f_{u1} = f_{u3} - f_{u2} = f_{u4} - f_{u3} = f_{d2} - f_{d1}$$

La translation en fréquence $f_{Tn}$ réalisée par les convertisseurs de fréquence de la charge utile correspond, pour un canal donnée, à la différence entre la fréquence de liaison montante et la fréquence de liaison descendante, c'est-à-dire :

$f_{Tn} = f_{un} - f_{dm}$ avec n variant de 1 à 8 et m étant égal à 1 ou 2.

Dès lors, il apparaît clairement que selon le plan de fréquences PD1, la translation en fréquence est différente selon chaque canal si bien qu'il est nécessaire d'avoir un convertisseur de fréquence pour chaque canal et chaque polarisation.

En revanche, dans le cas du plan de fréquences PD2, le regroupement judicieux des canaux entraîne que les canaux 1 et 2 partagent la même translation en fréquence ($f_{t1}=f_{t2}=f_{u1}-f_{d1}=f_{u2}-f_{d2}$) tandis que les canaux 3 et 4 partagent également la même translation en fréquence ($f_{t3}=f_{t4}=f_{u3}-f_{d1}=f_{u4}-f_{d2}$) différente de la translation $f_{t1}$. Le même raisonnement peut être fait respectivement pour les canaux 5 et 6 et pour les canaux 7 et 8 de sorte que :

$$f_{T1} = f_{T2} = f_{T5} = f_{T6} \text{ et } f_{T3} = f_{T4} = f_{T7} = f_{T8}.$$

Dès lors, le scénario 2 (plan de fréquences PD2) permet de n'utiliser qu'un convertisseur de fréquence par paire de canaux et de réduire par 2 le nombre de convertisseurs de fréquences par rapport au scénario 1 (plan de fréquences PD1).

On notera que le scénario 1 (sans contrainte lié à un regroupement dans le plan de fréquences) implique l'utilisation d'une architecture de charge utile telle que celle décrite en référence à la figure 2b).

Le scénario 2 (avec contrainte lié à un regroupement dans le plan de fréquences) permet d'utiliser une architecture de charge utile telle que la charge utile 200 illustrée en figure 2 c).

Après réception et sélection de la polarisation, le signal reçu est amplifié par un amplificateur faible bruit 212 LNA. Le signal est ensuite séparé en $N_s/2$ paires de canaux de liaison montante par un dispositif diviseur de signal 213. Les $N_s$ paires de canaux de liaison montante sont ensuite translatées en fréquence par un circuit convertisseur de fréquence 214 ; elles sont ensuite multiplexées et filtrées par un multiplexeur d'entrée 215 de façon à former $N_s/2$ paires canaux en accord avec le pan de fréquence de la liaison descendante PD2.

Les $N_s/2$ signaux à deux canaux à fréquence translatée et filtrée sont amplifiés au travers d'un amplificateur de puissance 216 HPA généralement formé par un amplificateur de canal 217 CAMP et un amplificateur à tube à ondes progressives 218 TWTA formant $N_s/2$ signaux regroupant deux faisceaux de liaison descendante.

Chacun des $N_s/2$ signaux regroupant deux faisceaux est ensuite séparé et filtré au travers d'un multiplexeur et filtre passe bande de sortie 219 de façon à former deux signaux de faisceau de liaison descendante.

Chacun des $N_s$ signaux de faisceau de liaison descendante est ensuite envoyé sur une source 220 telle qu'un cornet qui rayonne vers un réflecteur pour la formation d'un faisceau. Selon cette configuration, si on désigne par $N_{GW}$ le nombre de passerelle de communication, la charge utile 200 comporte :

- $2N_{GW}$ amplificateurs faible bruit 212 LNA ;
- $2N_{GW}$ dispositifs diviseurs de signal 213 ;
- $N_s/2$ circuits convertisseur de fréquence 214 ;
- $N_s/2$ multiplexeurs d'entrée 215;
- $N_s/2$ amplificateurs de puissance 216 HPA ;
- $N_s/2$ démultiplexeurs de sortie 219 ;
- $N_s$ cornets 220.

Outre le fait que la charge utile 200 (comme la charge utile 100 de la figure 2b)) permet de réduire d'un facteur N (N=2) le nombre de TWTA utilisés par rapport à la charge utile 10 de la figure 2a), on notera que la contrainte en fréquence imposée par le scénario 2 permet de réduire par deux le nombre de convertisseurs 214 par rapport à la configuration de la figure 2b); dans l'hypothèse plus générale d'un partage de N faisceaux par tube, le plan de fréquences de liaison descendante peut être adapté pour permettre l'utilisation de $N_s/N$ convertisseurs au lieu de $N_s$.

Comme déjà mentionné plus haut, la capacité en bande passante $C_{FWD}$ du satellite est définie par la formule suivante :

$$C_{FWD} = Min\left(\frac{P_{FWD} N_s G}{eirp}, N_s B_{spot}\right).$$

Le premier terme représente la limitation en puissance tandis que le second terme représente la limitation en bande passante. Lors de la conception de la charge utile, l'un des objectifs à atteindre consiste à rendre les deux termes égaux entre eux.

L'aire de la zone de couverture d'une charge utile peut être définie par la relation suivante :

$$A_{ser} = N_s A_{cell}$$

dans laquelle :

- $A_{ser}$ désigne l'aire de la zone de couverture exprimée en degrés au carré (°2),
- $A_{cell}$ désigne l'aire d'une cellule que l'on peut définir comme l'aire de la zone de couverture supportée par chacun des faisceaux.

Dans une zone de couverture multifaisceaux homogène, chaque cellule est représentée par un hexagone de sorte que la zone de couverture est composée d'une pluralité d'hexagones FH disjoints tels qu'illustrés sur la figure 4a). L'aire de chaque cellule est donnée par la formule :

$$A_{cell} = \frac{3\sqrt{3}\theta_{cell}^2}{8}$$

dans laquelle $\theta_{cell}$ est la dimension externe de la cellule exprimée par l'angle du satellite associé à la couverture.

L'aire de la zone de couverture est donc donnée par la relation suivante:

$$A_{ser} = \frac{3\sqrt{3}N_s\theta_{cell}^2}{8}$$

Toutefois, le faisceau d'antenne n'est pas capable de produire une forme hexagonale; une bonne approximation consiste à considérer une pluralité de faisceaux circulaires FC tels que représentés en figure 4 b) et ayant chacun une surface de couverture donnée par la relation :

$$A_{beam} = \frac{\pi(\theta_{cell} + 2\varepsilon)}{4}$$ prenant en compte une erreur de pointage ε lié à la précision de l'antenne.

De façon générale, le gain de l'antenne est donné par la formule suivante:

$$G = \frac{k}{(\theta_{cell} + 2\varepsilon)^2}$$ dans laquelle k est une constante de proportionnalité.

En conséquence, la capacité peut s'exprimer par la formule suivante:

$$C_{FWD} = \frac{P_{FWD}N_s k}{eirp(\theta_{cell} + 2\varepsilon)^2}$$

$$= \frac{P_{FWD}N_s k}{eirp.\theta_{cell}^2\left(1 + 2\frac{\varepsilon}{\theta_{cell}}\right)^2}$$

En partant d'une hypothèse où :

- les capacités sont identiques dans une architecture conventionnelle telle que celle de la figure 2a) et dans une architecture avec partage de N faisceaux par chaque tube TWTA (figure 2b) ou 2c)),

- les deux architectures présentent la même eirp par faisceau et utilisent des tubes TWTA présentant la même puissance RF,

on obtient :

$$C_{FWD} = \frac{P_{FWD} N_s k}{eirp.\theta_{cell,1}^2 \left(1 + 2\dfrac{\varepsilon_1}{\theta_{cell,1}}\right)^2} = \frac{P_{FWD} N_s k}{N.eirp.\theta_{cell,N}^2 \left(1 + 2\dfrac{\varepsilon N}{\theta_{cell,N}}\right)^2}$$

Si on suppose par une simplification mathématique que $\dfrac{\varepsilon_1}{\theta_{cell,1}} = \dfrac{\varepsilon_N}{\theta_{cell,N}}$, on a alors:

$$\theta_{cell,1}^2 = N\theta_{cell,N}^2$$

L'aire de la surface de couverture (notée respectivement $A_{ser,1}$ pour l'architecture conventionnelle et $A_{ser,N}$ pour l'architecture avec partage de N faisceaux par chaque tube TWTA) est donc donnée par la formule suivante:

$$A_{ser,1} = \frac{3\sqrt{3}N_s \theta_{cell,1}^2}{8}$$

et

$$A_{ser,N} = \frac{3\sqrt{3}N_s \theta_{cell,N}^2}{8}$$
$$= \frac{3\sqrt{3}N_s \theta_{cell,1}^2}{8N}$$
$$= \frac{A_{ser,1}}{N}$$

Ainsi, on peut noter qu'en restant à capacité constante, le fait de passer d'une architecture conventionnelle à une architecture avec TWTA à N faisceaux induit une réduction d'un facteur N du nombre de TWTA et de la zone de couverture, le nombre de faisceaux restant constant.

Les charges utiles 300 et 400 telles que représentées sur les figures 2d) et 2e) sont respectivement identiques aux charges utiles 100 et 200 des figues 2b) et 2c) à la différence qu'elles comportent $N_s$ CAMP (respectivement 317 et 417) et $N_s$ TWTA (respectivement 318 et 418) au lieu de $N_s/2$ CAMP et $N_s/2$ TWTA, soit N fois plus d'équipements amplificateurs (avec N=2). En d'autres termes, le nombre de faisceaux fournis par les charges utiles 300 et 400 est égal à $NxN_s$ (avec N=2).

En partant d'une nouvelle hypothèse où :

- les eirp par faisceau sont identiques dans une architecture conventionnelle telle que celle de la figure 2a) et dans une architecture avec partage de N faisceaux par chaque tube TWTA (figure 2d) ou 2e)),
- les deux architectures utilisent des tubes TWTA présentant la même puissance RF,

on obtient:

$$\frac{C_{FWD,N}}{C_{FWD,1}} = \frac{N_{s,N}\left(\theta_{cell,1} + 2\varepsilon_1\right)^2}{NN_{s,1}\left(\theta_{cell,N} + 2\varepsilon_N\right)^2}$$

$$= \frac{N_{s,N}\theta_{cell,1}^2}{NN_{s,1}\theta_{cell,N}^2}$$

En contraignant les deux systèmes à présenter la même zone de couverture, on obtient :

$$N_{s,1}\theta_{cell,1}^2 = N_{s,N}\theta_{cell,N}^2 = \frac{N_{s,N}\theta_{cell,1}^2}{N}$$

La relation entre la capacité $C_{FWD,1}$ pour l'architecture conventionnelle et $C_{FWD,N}$ pour l'architecture avec partage de N faisceaux par chaque tube TWTA est alors donnée par :

$$\frac{C_{FWD,N}}{C_{FWD,1}} = N$$

Ainsi, le passage d'une configuration telle que celle de la figure 2a) à une configuration telle que celle de la figure 2d) ou 2e) permet de multiplier la capacité par N (avec N=2 dans les exemples illustrés).

D'après ce qui précède, on peut donc définir deux critères (critère 1 et critère 2) selon que l'on souhaite conserver la même surface de couverture ou la même capacité par rapport à l'architecture conventionnelle de la figure 2a) : ces deux critères sont résumés dans le tableau 1 ci-dessous :

Tableau 1.

| Critère | Zone de couverture | Nombre de faisceaux | Nombre de TWTA | Capacité |
|---|---|---|---|---|
| 1 | Réduction d'un facteur N | Pas de changement | Réduction d'un facteur N | Pas de changement |
| 2 | Pas de changement | Augmentation d'un facteur N | Pas de changement | Augmentation d'un facteur N |

Les conclusions du tableau 1 ci-dessus sont confirmées par les valeurs numériques du tableau 2 ci-dessous données respectivement pour une charge utile conventionnelle de capacité C telle que la charge utile 10 de la figure 2 a), une charge utile optimisée de capacité C (critère 1) telle que la charge utile 100 ou 200 des figures 2 b) ou 2 c), une charge utile optimisée de capacité 2xC (critère 2 avec N=2) telle que la charge utile 300 ou 400 des figures 2 d) ou 2 e) et une charge utile conventionnelle de capacité 2xC (non représentée ; cette charge est identique à la charge conventionnelle 10 mais comportent deux fois plus d'équipements, i.e. comportent $2N_s$ convertisseurs, filtres d'entrée, CAMP, TWTA, filtres de sortie et cornets).

Tableau 2

|  | Charge utile conventionnelle de capacité C | Critère 1 | Critère 2 | Charge utile conventionnelle de capacité 2C |
|---|---|---|---|---|
| Aire de zone de couverture | 9.4°2 | 4.7°2 | 9.4°2 | 9.4°2 |
| Nombre de faisceaux | 40 | 40 | 80 | 80 |
| Aire d'une cellule | 0.24°2 | 0.12°2 | 0.12°2 | 0.12°2 |
| Dimension externe d'une cellule | 0.60° | 0.43° | 0.43° | 0.43° |

(suite)

| | Charge utile conventionnelle de capacité C | Critère 1 | Critère 2 | Charge utile conventionnelle de capacité 2C |
|---|---|---|---|---|
| Erreur de pointage | 0.06° | 0.04° | 0.04° | 0.04° |
| Dimension de faisceau | 0.72° | 0.51° | 0.51° | 0.51° |
| Gain de l'antenne | 44.2 dBi | 47.2 dBi | 47.2 dBi | 47.2 dBi |
| Nombre de TWTA Puissance RF d'un TWTA | 40 130 W | 20 130 W | 40 130 W | 80 65 W |
| EIRP du système* | 76.5 dBW | 76.5 dBW | 79.5 dBW | 79.5 dBW |
| Capacité | 10.0 GHz | 10.0 GHz | 20.1 GHz | 20.1 GHz |
| * Correspond à l'eirp totale fournie par le système et non pas à l'eirp disponible par faisceau; ainsi, une capacité double par rapport à un système de référence doit fournir une eirp double de ce système, soit 3 dB de plus." | | | | |

Nous allons dans ce qui suit analyser la configuration des différentes charges utiles décrites ci-dessus en référence aux figures 2 a) à 2 e) en termes de bilan massique.

Concernant la charge utile de référence telle que représentée en figure 2 a) avec un seul faisceau par TWTA et une capacité C, la masse de cette charge utile s'exprime de la manière suivante :

$$M_{FWD,1,C} = 2N_{GW}m_{LNA} + 2N_{GW}m_{split} + N_s m_{FC} + N_s m_{TWTA} + N_s m_f + N_a m_{refl}G_1$$

(Relation 1)

Où

$M_{FWD}$ est la masse de la charge utile 10,

$m_{LNA}$ est la masse associée à l'amplificateur faible bruit 12,

$m_{split}$ est la masse associée au dispositif diviseur 13,

$m_{FC}$ est la masse associée au convertisseur de fréquence,

$m_{TWTA}$ est la masse associée à l'amplificateur de puissance 16,

$m_f$ est la masse associée à chaque cornet 20 d'antenne,

$m_{ref1}$ est la masse spécifique associée aux réflecteurs and à la structure de l'antenne en fonction du gain,

$N_a$ est le nombre d'antennes,

$G$ est le gain de l'antenne exprimé sous forme de ratio (et non en dB).

On notera que la contribution des filtres 15 et 19 sera considérée comme identique dans toutes les configurations étudiées par la suite et ne sera donc pas prise en compte dans les calculs.

Concernant une charge utile de référence avec un seul faisceau par TWTA et une capacité NxC, elle sera identique à celle de la figure 2 a) mais comportent N fois plus d'équipements, i.e. comportent $NxN_s$ convertisseurs, filtres d'entrée, CAMP; TWTA, filtres de sortie et cornets. Dès lors, la masse de cette charge utile de référence avec une capacité NxC s'exprime de la manière suivante :

$$M_{FWD,1.NC} = 2NN_{GW}m_{LNA} + 2NN_{GW}m_{split} + NN_s m_{FC} + NN_s m_{TWTA} + NN_s m_f + NN_a m_{refl}G_1$$

(Relation 1')

Nous nous placerons dans ce qui suit dans l'hypothèse du critère 1 évoqué plus haut (capacité C maintenue).

Comme déjà décrit, deux scénarios sont possibles selon que l'on n'introduit aucune contrainte en fréquence (scénario 1 de la figure 2 b)) ou que l'on introduit une contrainte en fréquence (scénario 2 de la figure 2 c)).

**Critère 1**

*Scénario 1*

La masse de la charge utile de la figure 2 b) s'exprime de la manière suivante :

$$M_{FWD} = 2N_{GW}m_{LNA} + 2N_{GW}m_{split} + N_s m_{FC} + \frac{N_s m_{TWTA}}{N} + N_s m_f + NN_a m_{refl}G_1$$

(Relation 2)

En comparant cette relation 2 à la relation 1 ci-dessus (figure 2 a)), la différence entre les deux relations nous donne :

$$\Delta M_{FWD} = M_{FWD,1.C} - M_{FWD}$$
$$= \left(1 - \frac{1}{N}\right)N_s m_{TWTA} - (N-1)N_a m_{refl}G_1$$

(Équation 1)

*Scenario 2*

La masse de la charge utile de la figure 2 c) s'exprime de la manière suivante:

$$M_{FWD} = 2N_{GW}m_{LNA} + 2N_{GW}m_{split} + \frac{N_s m_{FC}}{N} + \frac{N_s m_{TWTA}}{N} + N_s m_f + NN_a m_{refl}G_1$$

(Relation 3)

En comparant cette relation 3 à la relation 1 ci-dessus (figure 2 a)), la différence entre les deux relations nous donne :

$$\Delta M_{FWD} = M_{FWD,1.C} - M_{FWD}$$
$$= N_s\left(1 - \frac{1}{N}\right)(m_{FC} + m_{TWTA}) - (N-1)N_a m_{refl}G_1$$

(Équation 2)

La figure 5 représente l'évolution linéaire de la masse de la charge utile en fonction du nombre de faisceaux dans les trois cas évoqués ci-dessus (relation 1 : cas de référence de la figure 2 a) - relation 2 : cas du scénario 1 - relation 3 : cas du scénario 2) dans le cas où N=2. On notera que les deux premiers termes étant identiques dans les trois relations 1 à 3, ils ont été omis dans la représentation de la figure 5 : cette omission permet de rendre la représentation indépendante de la section d'entrée et entraîne uniquement un décalage suivant l'axe des ordonnées.

L'intersection, respectivement de la droite de référence et de la droite liée au scénario 1 et de la droite de référence et de la droite liée au scénario 2, correspond à la résolution de $\Delta M_{FWD}$, = 0 (respectivement pour l'équation 1 et l'équation 2).

On constate dès lors, qu'au-delà d'une valeur seuil ($N_{seuil1}$ pour la charge utile du scénario 1 et $N_{seuil2}$ pour la charge utile du scénario 2) du nombre de faisceaux, la masse de la charge utile des scénarios 1 et 2 est plus faible que la charge utile de référence. Dans le cas de la figure 5, on observe que $N_{seuil1}$ est environ égal à 23 et que $N_{seuil2}$ est environ égal à 18. Typiquement, pour N=2 (deux faisceaux par TWTA) on prendra un nombre de faisceaux seuil $N_{seuil}$ supérieur à 15 et de préférence supérieur à 20.

Bien entendu, le fait d'imposer une contrainte en fréquences (figure 2 c)) permet de réduire davantage la masse de la charge utile.

La figure 5 représente également l'évolution linéaire de la capacité en fonction du nombre de faisceaux. On constate que le nombre seuil de faisceaux au-delà duquel les configurations des figures 2 b) ou 2 c) sont plus avantageuses que la configuration de référence peut également se traduire par une capacité seuil : dans le cas de 20 faisceaux par exemple, la capacité seuil est environ égale à 5 GHz.

En conclusion, le procédé d'optimisation selon l'invention permet d'optimiser en termes de masse une charge utile de référence en passant à une charge utile comportant des tubes amplificateurs amplifiant chacun N (N=2) faisceaux lorsque la capacité est supérieure à 5 Ghz dans l'exemple ci-dessus (ou lorsque le nombre de faisceaux est supérieur à 20). Bien entendu, le nombre de faisceaux seuil ou la capacité seuil dépendent des différentes masses des composants et de la technologie choisie.

Par ailleurs, il convient de noter que la masse pourrait également prendre en compte les équipements auxiliaires ainsi que les équipements nécessaires pour assurer des fonctions de redondance en cas de panne ; pour simplifier la présentation, ces contributions n'ont pas été prises en compte. Ces contributions négligées ne modifient toutefois pas le résultat obtenu. De plus, dans la mesure où le nombre d'équipements est réduit (réduction du nombre d'amplificateurs dans le cas des scénarios 1 et 2, voire du nombre de convertisseurs de fréquence dans le cas du scénario 2), la prise en compte des équipements de redondance n'en serait que plus avantageuse en termes de gain massique.

Des calculs similaires de comparaison entre la configuration de référence et les configurations avec plusieurs faisceaux par amplificateur montrent que l'optimisation permet non seulement un gain en termes de masse de la charge utile mais également une réduction en termes d'exigence de puissance DC nécessaire et de dissipation thermique.

Nous nous placerons dans ce qui suit dans l'hypothèse du critère 2 évoqué plus haut (capacité C multipliée par N).

Comme déjà décrit, deux scénarios sont possibles selon que l'on n'introduit aucune contrainte en fréquence (scénario 1 de la figure 2 d)) ou que l'on introduit une contrainte en fréquence (scénario 2 de la figure 2 e)):

On notera par ailleurs que le nombre de faisceaux noté $N_s$ ci-dessous correspond au nombre de faisceaux total du critère 1 ; dans le cas du critère 2, le nombre total de faisceaux est $NxN_s$, la notation du critère 1 ayant été maintenue pour conserver une certaine normalisation.

**<u>Critère 2</u>**

***Scénario 1***

La masse de la charge utile de la figure 2 d) s'exprime de la manière suivante :

$$M_{FWD} = 2NN_{GW}m_{LNA} + 2NN_{GW}m_{split} + NN_s m_{FC} + N_s m_{TWTA} + NN_s m_f + NN_a m_{refl} G_1$$
(Relation 2').

En comparant cette relation 2' à la relation 1', la différence entre les deux relations nous donne :

$$\Delta M_{FWD} = M_{FWD,1,NC} - M_{FWD}$$
$$= (N-1)N_s m_{TWTA}$$

(Equation 1')

*Scénario 2*

La masse de la charge utile de la figure 2 e) s'exprime de la manière suivante:

$$M_{FWD} = 2NN_{GW}m_{LNA} + 2NN_{GW}m_{split} + N_sm_{FC} + N_sm_{TWTA} + NN_sm_f + NN_am_{refl}G_1$$

(Relation 3')

En comparant cette relation 3' à la relation 1', la différence entre les deux relations nous donne :

$$\Delta M_{FWD} = M_{FWD.1.NC} - M_{FWD}$$
$$= (N-1)N_s(m_{FC} + m_{TWTA})$$

(Equation 2')

Une résolution de l'équation $\Delta M_{FWD} = 0$, aussi bien pour l'équation 1' que pour l'équation 2', montre que, quelle que soit la valeur du nombre de faisceaux, chacune des configurations des figures 2 d) ou 2 e) est plus avantageuse en termes de masse que la configuration de référence à capacité identique NxC utilisant un faisceau par tube TWTA.
On constate donc que, contrairement au critère 1, l'application du critère 2 entraîne toujours une situation plus favorable sur le bilan de masse lorsqu'on partage plusieurs faisceaux sur un même tube.
Par ailleurs, il est important de noter qu'en passant d'une configuration de référence avec une capacité C (figure 2 a)) à une configuration optimisée (figure 2 d) ou 2 e)), on double la capacité et le nombre de faisceaux sans doubler la masse. En d'autres termes, la masse de la charge utile optimisée est augmentée d'un facteur inférieur à N (N=2). En outre, la figure de mérite du satellite sur la liai son de retour est une fonction directe du nombre de faisceaux ; dès lors, cette figure de mérite va considérablement augmenter.
Comme pour le critère 1, des calculs similaires de comparaison entre la configuration de référence de capacité 2xC et les configurations avec plusieurs faisceaux par amplificateur montrent que l'optimisation permet non seulement un gain en termes de masse de la charge utile mais également une réduction en termes d'exigence de puissance DC nécessaire et de dissipation thermique.
Bien entendu, l'invention n'est pas limitée au mode de réalisation qui vient d'être décrit.
Notamment, l'invention a été plus particulièrement décrite dans le cas où N est égal à 2 ; le procédé selon l'invention s'applique à n'importe quel nombre entier naturel N strictement supérieur à 1 de sorte que le nombre de faisceaux $N_s$ est un multiple de N.
En outre, nous avons plus spécifiquement décrit le cas d'une chaine d'amplification comportant un CAMP suivi d'un TWTA. On notera cependant que le procédé selon l'invention s'applique également au cas d'un amplificateur SSPA ou d'un équipement du type MPA. Dans le cas d'un MPA, à capacité constante et à partir d'un nombre seuil de faisceaux ou d'une valeur seuil de capacité, l'équipement MPA de référence comportant $N_s$ entrées et $N_s$ sorties et destiné à amplifier $N_s$ faisceaux est remplacé par un équipement MPA comportant $N_s/N$ entrées et $N_s/N$ sorties et destiné à amplifier $N_s$ faisceaux répartis sur les $N_s/N$ entrées. Lorsque la capacité C est multipliée par N, l'équipement MPA de référence comportant $N_s$ entrées et $N_s$ sorties et destiné à amplifier $N_s$ faisceaux est remplacé par un équipement MPA comportant $N_s$ entrées et $N_s$ sorties et destiné à amplifier $NxN_s$ faisceaux répartis sur les $N_s$ entrées.

**Revendications**

1. Procédé d'optimisation de la charge utile d'un satellite de télécommunication multifaisceaux, dite charge utile optimisée (100, 200, 300, 400), à partir d'une charge utile de référence (10) pour la formation de $N_s$ faisceaux sur une liaison descendante, $N_s$ étant un nombre entier naturel strictement supérieur à 1, ladite charge utile de référence (10) comportant des moyens d'amplification formés :

- soit par $N_s$ premières unités d'amplification (16, 17, 18)) comportant une entrée et une sortie, chacune des $N_s$ premières unités d'amplification étant destinée à amplifier un faisceau,
- soit par un premier équipement d'amplification comportant $N_s$ entrées et $N_s$ sorties et destiné à amplifier les $N_s$ faisceaux,

ledit procédé étant **caractérisé en ce que** ladite optimisation est réalisée en répondant à l'un des deux critères suivants :

- premier critère : la capacité C de ladite charge utile de référence est conservée et l'aire de la zone de couverture de ladite charge utile est divisée par N, N étant un nombre entier naturel strictement supérieur à 1 de sorte que $N_s$ est un multiple de N;
- second critère : l'aire de la zone de couverture de ladite charge utile est conservée et ladite capacité C est multipliée par N;

selon ledit premier critère; ledit procédé comporte les étapes suivantes:

- comparaison dudit nombre $N_s$ de faisceaux avec un nombre seuil de faisceaux $N_{seuil}$ ou comparaison de ladite capacité avec une capacité seuil $C_{seuil}$;
- si Ns est supérieur à $N_{seuil}$ ou si la capacité C est supérieure à $C_{seuil}$:

  o lorsque lesdits moyens d'amplification sont formés par lesdites $N_s$ premières unités d'amplification : substitution dans ladite charge utile optimisée desdites $N_s$ premières unités (16, 17, 18) par $N_s$/N secondes unités d'amplification (116, 117, 118, 216, 217, 218); chacune des $N_s$/N secondes unités d'amplification étant destinée à amplifier N faisceaux ;
  o lorsque lesdits moyens d'amplification sont formés par ledit premier équipement d'amplification : substitution dans ladite charge utile optimisée dudit premier équipement par un second équipement d'amplification comportant $N_s$/N entrées et $N_s$/N sorties et destiné à amplifier les $N_s$ faisceaux répartis sur lesdites $N_s$/N entrées ;

selon ledit second critère, ledit procédé comporte les étapes suivantes :

- lorsque lesdits moyens d'amplification sont formés par lesdites $N_s$ premières unités d'amplification : substitution dans ladite charge utile optimisée desdites $N_s$ premières unités (16, 17, 18) par $N_s$ troisièmes unités d'amplification (317, 318, 417, 418), chacune desdites $N_s$ troisièmes unités d'amplification étant destinée à amplifier N faisceaux ;
- lorsque lesdits moyens d'amplification sont formés par ledit premier équipement d'amplification : substitution dans ladite charge utile optimisée dudit premier équipement par un troisième équipement d'amplification comportant $N_s$ entrées et $N_s$ sorties et destiné à amplifier $NxN_s$ faisceaux répartis sur lesdites $N_s$ entrées.

2.  Procédé selon la revendication 1 **caractérisé en ce que** la détermination dudit nombre seuil de faisceaux $N_{seuil}$ comporte les étapes suivantes :

- détermination de la masse de ladite charge utile de référence en fonction du nombre de faisceaux $N_s$;
- détermination de la masse de la charge utile optimisée en fonction du nombre de faisceau $N_s$;
- détermination de $N_{seuil}$ lorsque les masses respectives de ladite charge de référence et de ladite charge optimisée sont égales.

3.  Procédé selon l'une des revendications précédentes **caractérisé en ce que** l'entier naturel N est égal à 2.

4.  Procédé selon l'une des revendications précédentes **caractérisé en ce que** le nombre seuil de faisceaux $N_{seuil}$ est supérieur à 15 et de préférence supérieur à 20.

5.  Procédé selon l'une des revendications précédentes **caractérisé en ce que** lesdites unités d'amplification sont formées par des tubes à ondes progressives TWTA.

6.  Procédé selon l'une des revendications 1 à 3 **caractérisé en ce que** lesdites unités d'amplification sont formées par des amplificateurs à semiconducteur SSPA.

7.  Procédé selon l'une des revendications 1 à 3 **caractérisé en ce que** lesdits équipements d'amplification sont formés par des amplificateurs multiports MPA.

8.  Procédé selon l'une des revendications précédentes **caractérisé en ce qu'**il comporte une étape de réduction d'un facteur N du nombre de convertisseurs de fréquence compris dans ladite charge utile optimisée par regroupement par groupe de N canaux dans le plan de fréquences de la liaison descendante.

9. Procédé selon l'une des revendications précédentes **caractérisé en ce que** ladite capacité seuil $C_{seuil}$ est supérieure ou égale à 5 Ghz.

**Claims**

1. A method for the optimization of the payload of a multispot telecommunication satellite, designated optimized payload (100, 200, 300, 400), from a reference payload (10) for the formation of $N_s$ spots on a downlink, $N_s$ being a natural whole number strictly greater than 1, said reference payload (10) comprising amplification means formed :

   - either by $N_s$ first amplification units (16, 17, 18) comprising an input and and output, each of the $N_s$ first amplification units being intended to amplify a spot,
   - or by a first amplification equipment comprising $N_s$ inputs and $N_s$ outputs and intended to amplify the $N_s$ spots,

   said optimization being realized in response to one of the following two criteria :

   - first criterion : the capacity C of said reference payload is conserved and the area of the covering zone of said payload is divided by N, N being a natural whole number strictly greater than 1 so that $N_s$ is a multiple of N ;
   - second criterion : the area of the covering zone of said payload is conserved and said capacity C is multiplied by N ;

   according to said first criterion, said method comprises the following stages:

   - comparison of said number $N_s$ of spots with a threshold number of spots $N_{threshold}$ or comparison of said capacity with a threshold capacity $C_{threshold}$ ;
   - if Ns is greater than $N_{threshold}$ or if the capacity of C is greater than $C_{threshold}$:

     o when said amplification means are formed by said $N_s$ first amplification units : substitution in said optimized payload of said $N_s$ first units (16, 17, 18) by $N_s/N$ second amplification units (116, 117, 118, 216, 217, 218), each of the $N_s/N$ second amplification units being intended to amplify N spots ;
     o when said amplification means are formed by said first amplification equipment: substitution in said optimized payload of said first equipment by a second amplification equipment comprising $N_s/N$ inputs and $N_s/N$ outputs and intended to amplify the $N_s$ spots distributed over said $N_s/N$ inputs ;

   according to said second criterion, said method comprises the following stages :

   - when said amplification means are formed by said $N_s$ first amplification units : substitution in said optimized payload of said $N_s$ first units (16, 17, 18) by $N_s$ third amplification units (317, 318, 417, 418), each of said $N_s$ third amplification units being intended to amplify N spots ;
   - when said amplification means are formed by said first amplification equipment: substitution in said optimized payload of said first equipment by a third amplification equipment comprising $N_s$ inputs and $N_s$ outputs and intended to amplify $NxN_s$ spots distributed over said $N_s$ inputs.

2. The method according to Claim 1, **characterized in that** the determination of said threshold number of spots $N_{threshold}$ comprises the following stages :

   - determination of the mass of said reference payload as a function of the number of spots $N_s$;
   - determination of the mass of the optimized payload as a function of the number of spots $N_s$;
   - determination of $N_{threshold}$ when the respective masses of said reference payload and said optimized payload are equal.

3. The method according to any of the preceding claims, **characterized in that** the natural whole N is equal to 2.

4. The method according to any of the preceding claims, **characterized in that** the threshold numer of spots $N_{threshold}$ is greater than 15 and preferably greater than 20.

5. The method according to any of the preceding claims, **characterized in that** said amplification units are formed by travelling wave tubes TWTA.

6. The method according to any of Claims 1 to 3, **characterized in that** said amplification units are formed by semiconductor amplifiers SSPA.

7. The method according to any of Claims 1 to 3, **characterized in that** said amplification equipment are formed by multiport amplifiers MPA.

8. The method according to any of the preceding claims, **characterized in that** it comprises a stage of reduction of a factor N of the number of frequency converters comprised in said optimized payload by regrouping by group of N channels in the downlink frequency plan.

9. The method according to any of the preceding claims, **characterized in that** said threshold capacity $C_{threshold}$ is greater than or equal to 5 Ghz.


**Patentansprüche**

1. Verfahren zur Optimierung der Nutzlast eines Multispotbeam-Telekommunikationssatelliten, wobei die Nutzlast (100, 200, 300, 400) ausgehend von einer Referenznutzlast (10) optimiert wird, für die Bildung von $N_s$ Spotbeams, in einer Downlink-Verbindung, wobei $N_s$ eine natürliche ganze Zahl strikt größer als 1 ist, wobei die Referenznutzlast (10) Verstärkermittel aufweist, welche gebildet sind durch:

   - entweder $N_s$ erste Verstärkereinheiten (16, 17, 18), welche einen Eingang und einen Ausgang aufweisen, wobei jede der $N_s$ ersten Verstärkereinheiten dazu bestimmt ist, einen Spotbeam zu verstärken,
   - oder durch eine erste Verstärkerausrüstung, welche $N_s$ Eingänge und $N_s$ Ausgänge aufweist, und welche dazu bestimmt ist, die $N_s$ Spotbeams zu verstärken,

   wobei das Verfahren **dadurch gekennzeichnet ist, dass** die Optimierung nach Vorgabe eines der beiden folgenden Kriterien ausgeführt wird:

   - erstes Kriterium: die Kapazität C der Referenznutzlast wird behalten, und die Fläche des Versorgungsbereichs der Nutzlast wird durch N geteilt, wobei N eine natürliche ganze Zahl strikt größer als 1 ist, derart, dass $N_s$ ein Vielfaches von N ist;
   - zweites Kriterium: die Fläche des Versorgungsbereichs der Nutzlast wird behalten, und die Kapazität C wird mit N multipliziert; wobei, entsprechend dem ersten Kriterium, das Verfahren die folgenden Schritte umfasst:
   - Vergleichen der Anzahl $N_s$ an Spotbeams mit einer Schwellenanzahl $N_{seuil}$ an Spotbeams, oder Vergleichen der Kapazität mit einer Schwellenkapazität $C_{seuil}$;
   - wenn $N_s$ größer ist als $N_{seuil}$, oder wenn die Kapazität C größer ist als $C_{seuil}$:

      o wenn die Verstärkermittel durch die $N_s$ ersten Verstärkereinheiten gebildet sind: Ersetzen, in der optimierten Nutzlast, der $N_s$ ersten Einheiten (16, 17, 18) durch $N_s/N$ zweite Verstärkereinheiten (116, 117, 118, 216, 217, 218), wobei jede der $N_s/N$ zweiten Verstärkereinheiten dazu bestimmt ist, N Spotbeams zu verstärken;
      o wenn die Verstärkermittel durch die erste Verstärkerausrüstung gebildet sind: Ersetzen, in der optimierten Nutzlast, der ersten Ausrüstung durch eine zweite Verstärkerausrüstung, welche $N_s/N$ Eingänge und $N_s/N$ Ausgänge aufweist, und welche dazu bestimmt ist, die $N_s$ Spotbeams zu verstärken, welche auf die $N_s/N$ Eingänge verteilt sind;

   wobei, entsprechend dem zweiten Kriterium, das Verfahren die folgenden Schritte umfasst:

   - wenn die Verstärkermittel durch die $N_s$ ersten Verstärkereinheiten gebildet sind: Ersetzen, in der optimierten Nutzlast, der $N_s$ ersten Einheiten (16, 17, 18) durch $N_s$ dritte Verstärkereinheiten (317, 318, 417, 418), wobei jede der $N_s$ dritten Verstärkereinheiten dazu bestimmt ist, N Spotbeams zu verstärken;
   - wenn die Verstärkermittel durch die erste Verstärkerausrüstung gebildet sind: Ersetzen, in der optimierten Nutzlast, der ersten Ausrüstung durch eine dritte Verstärkerausrüstung, welche $N_s$ Eingänge und $N_s$ Ausgänge aufweist, und welche dazu bestimmt ist, die $N{\times}N_s$ Spotbeams zu verstärken, welche auf die $N_s$ Eingänge verteilt

sind.

2. Verfahren nach Anspruch 1, **dadurch gekennzeichnet, dass** das Bestimmen der Schwellenanzahl $N_{seuil}$ an Spotbeams die folgenden Schritte umfasst:

  - Bestimmen der Masse der Referenznutzlast in Abhängigkeit von der Anzahl $N_s$ an Spotbeams;
  - Bestimmen der Masse der optimierten Nutzlast in Abhängigkeit von der Anzahl $N_s$ an Spotbeams;
  - Bestimmen von $N_{seuil}$, wenn die jeweiligen Massen der Referenznutzlast und der optimierten Nutzlast gleich sind.

3. Verfahren nach einem der vorhergehenden Ansprüche, **dadurch gekennzeichnet, dass** die natürliche ganze Zahl N gleich 2 ist.

4. Verfahren nach einem der vorhergehenden Ansprüche, **dadurch gekennzeichnet, dass** die Schwellenanzahl $N_{seuil}$ an Spotbeams größer ist als 15, und vorzugsweise größer ist als 20.

5. Verfahren nach einem der vorhergehenden Ansprüche, **dadurch gekennzeichnet, dass** die Verstärkereinheiten durch Wanderfeldröhren TWTA gebildet sind.

6. Verfahren nach einem der Ansprüche 1 bis 3, **dadurch gekennzeichnet, dass** die Verstärkereinheiten durch Halbleiterverstärker SSPA gebildet sind.

7. Verfahren nach einem der Ansprüche 1 bis 3, **dadurch gekennzeichnet, dass** die Verstärkerausrüstungen durch Multiport-Verstärker MPA gebildet sind.

8. Verfahren nach einem der vorhergehenden Ansprüche, **dadurch gekennzeichnet, dass** es einen Schritt des Reduzierens um einen Faktor N der Anzahl an Frequenzumsetzern umfasst, welche in der optimierten Nutzlast enthalten sind, durch ein Neuordnen, pro Gruppe von N Kanälen, im Frequenzplan in der Downlink-Verbindung.

9. Verfahren nach einem der vorhergehenden Ansprüche, **dadurch gekennzeichnet, dass** die Schwellenkapazität $C_{seuil}$ größer oder gleich 5 GHz ist.

**FIGURE 1**

FIGURE 2

PM

$f_{u1}$     .     $f_{u2}$      $f_{u3}$      $f_{u4}$

| Ch 1 | Ch 2 | Ch 3 | Ch 4 |
|------|------|------|------|
| Ch 5 | Ch 6 | Ch 7 | Ch 8 |

SCENARIO 1            SCENARIO 2      PD 2

PD 1

**SCENARIO 1**

$f_{d1}$      $f_{d2}$

Spot 1    Ch 1

Spot 2        Ch 5

Spot 3    Ch 2

Spot 4        Ch 6

Spot 5    Ch 3

Spot 6        Ch 7

Spot 7    Ch 4

Spot 8        Ch 8

**SCENARIO 2**

$f_{d1}$      $f_{d2}$

Ch 1

       Ch 2

Ch 3

       Ch 4

Ch 5

       Ch 6

Ch 7

       Ch 8

**FIGURE 3**

FH

$\theta_{cell}$

FC

a)      **FIGURE 4**      b)

**FIGURE 5**

## RÉFÉRENCES CITÉES DANS LA DESCRIPTION

**Documents brevets cités dans la description**

- FR 2783377